# EUROPEAN PATENT APPLICATION

(11) **EP 4 826 641 A1**
(43) Date of publication of application: **21.10.2026**
(21) Application number: 25171258.4
(22) Date of filing: 17.04.2025
(51) Int. Cl.: G06T 5/60, G06T 5/70, G06T 5/90, G06T 7/00, G06T 7/11, G06T 7/155, G06T 7/194, G06T 7/136

(54) **METHODS AND DEVICES FOR READING A MARKING ON A SPECTACLE LENS PRODUCT IN A MANUFACTURING PROCESS**

(71) Applicant: Carl Zeiss Vision International GmbH, 73430 Aalen (DE)
(72) Inventor: Strohmaier, Jens, 73430 Aalen (DE); Binder, Niklas, 73430 Aalen (DE); Sulugodu Arunachala, Vivek Bharadhwaj, 73430 Aalen (DE); Launay, Florian, 73430 Aalen (DE); Buergin, Jens, 73430 Aalen (DE)
(74) Representative: Altmann Stößel Dick Patentanwälte PartG mbB

(57) **Abstract**

The present invention relates to a computer-implemented method for enhancing a contrast characteristic of at least one base image (148) showing at least a portion of at least one marking (144) applied to a spectacle lens product (150), the method comprising:
- generating at least one enhanced image (146) based on the at least one base image (148) showing at least the portion of the at least one marking (144) applied to the spectacle lens product (150) by using an image enhancement model (137), wherein the image enhancement model (137) is or comprises at least one machine learning model (138), wherein the machine learning model (138) is configured for enhancing at least one contrast characteristic in the enhanced image (146).

## Description

### Technical Field

The present invention relates to a computer-implemented method for enhancing a contrast characteristic of at least one image, a computer-implemented method for mix-up checking a particular spectacle lens product in a process of manufacturing a plurality of spectacle lenses and a corresponding computer program, device and computer-readable medium as well as a system for enhancing a contrast characteristic of at least one image and a corresponding computer program, device and computer-readable medium.

### Background art

EP 3 647 859 A1 relates to a method for producing a spectacle lens from a lens blank using a laser marking technique which does not require a producing work and cost. The present invention is a method for producing a spectacle lens from a lens material, and includes: a marking step of marking an identification mark for identifying the spectacle lens, and a processing information mark which is used to process a lens blank and includes a tray identification 2D code, a tray identification code, a shape line and a position mark by forming a hole or a groove in a convex surface of the lens material by laser; and a concave surface machining processing step of reading the processing information mark, and machining a concave surface of the lens blank based on the read processing information mark.

### Problem to be solved

It is therefore an objective of the present invention, in particular with regard to the disclosure of EP 3 647 859 A1, to provide a computer-implemented method for enhancing a contrast characteristic of at least one image, a computer-implemented method for mix-up checking a particular spectacle lens product in a process of manufacturing a plurality of spectacle lenses and a corresponding computer program, device and computer-readable medium as well as a system for enhancing a contrast characteristic of at least one base image showing at least a portion of at least one marking applied to a spectacle lens product and a corresponding computer program, device and computer-readable medium, which at least partially overcome the above-mentioned problems of the state of the art.

It is a further particular objective of the present invention to improve the reliability of a marking read of a marking applied to a spectacle lens product.

It is a further particular objective of the present invention to increase the speed of a manufacturing process. It is a further particular objective of the present invention to improve the first pass yield, such as by applying a mix-up check, such that a higher proportion of products are passing quality checks the first time they are produced, which may lead to increased efficiency, reduced costs and improved overall quality in the manufacturing process.

### Summary

This problem is addressed by a computer-implemented method for enhancing a contrast characteristic of at least one image, a computer-implemented method for mix-up checking a particular spectacle lens product in a process of manufacturing a plurality of spectacle lenses and a corresponding computer program, device and computer-readable medium as well as a system for enhancing a contrast characteristic of at least one base image showing at least a portion of at least one marking applied to a spectacle lens product and a corresponding computer program, device and computer-readable medium with the features of the independent claims. Advantageous embodiments, which might be realized in an isolated fashion or in any arbitrary combinations, are listed in the dependent claims as well as throughout the specification.

In a first aspect, a computer-implemented method for enhancing a contrast characteristic of at least one base image showing at least a portion of at least one marking applied to a spectacle lens product is disclosed. For this aspect, reference may be made to any further aspect, Embodiment and/or definition disclosed herein.

The computer-implemented method for enhancing the contrast characteristic of at least one base image may be configured for being used in order to manufacture at least one spectacle lens and/or to mix-up check a particular spectacle lens product in a process of manufacturing a plurality of spectacle lenses.

The term "computer-implemented method" refers to a method, which involves an apparatus, specifically a computer, or a plurality of apparatus, particularly connected via a computer network. The plurality of apparatus may be connected via the computer network by using at least one connection interfaces comprised by any apparatus of the plurality of apparatus. The computer-implemented method may be implemented as at least one computer program that may be provided on a storage medium. Preferably any one of the steps of the computer-implemented method may be performed by using the at least one computer program. Alternatively, the at least one computer program may be accessible by the at least one apparatus, which may be configured for performing the method via a network, such as via an in-house network or via internet.

The term "contrast characteristic" refers to a specific type of visibility associated with a color and/or luminesce gradient within an image. The specific type of visibility may be at least one of: a contrast, a contrast ratio. An increased contrast may enhance a visibility of at least one object by amplifying the differences to at least one further object. Whereby at least one edge of the object may be more distinct.

The term "enhancing a contrast characteristic" refers to an increase in said contrast characteristic, particularly when compared to the at least one base image showing at least the portion of the at least one marking applied to the spectacle lens product. Thereby, the visibility of the marking particularly in respect to a background may be increased. This increase may improve the read out of the marking, preferably in a manner the probability to reading the marking correctly is increased.

The term "image" refers to a visual representation of data. The image may comprise a plurality of pixel that are arranged in a raster format, wherein a pixel may be configured to define at least one numerical value representing a color, a gray scale, such as black and white, and/or an intensity. Alternatively, or in addition, the image may comprise a plurality of vectors, wherein a vector may be configured to define at least one shape and/or at least one color.

In addition to raster and vector formats, other data formats such as bitmap, JPEG, PNG, or TIFF may also be relevant, depending on the application and requirements of the image processing task.

Furthermore, the image may utilize input parameters for individual color channels, such as red, green, and blue (RGB), or other color models like CMYK (cyan, magenta, yellow, and key/black) or HSV (hue, saturation, and value). These parameters may be used to adjust the color balance, contrast, and other visual characteristics of the image, enhancing its quality and suitability for specific tasks, such as reading markings on precursor products of spectacle lenses.

Based on standard ISO 13666:2019, also herein referred to as "Standard", 3.5.2, the term "spectacle lens" refers to a particular kind of optical lens which is used for determining and/or altering the vision of the wearer of the optical lens, wherein the spectacle lens is carried in front of the eye of the wearer, thereby avoiding a direct contact with the eye of a wearer. Instead of the term "wearer", a different term, such as "person", "subject", or "user", may also be applicable. The term "spectacle lens" may refer to a finished spectacle lens, such as a spectacle lens that does not have to undergo a further manufacturing step.

The steps of the method for enhancing a contrast characteristic may be performed in the given order. A different order, however, may also be feasible. Further, two or more of the method steps may be performed simultaneously. Thereby, the method steps may at least partly overlap in time. Further, the method steps may be performed once or repeatedly. Thus, one or more or even all of the method steps may be performed once or repeatedly. The method may comprise additional method steps, which are not listed herein.

The term "spectacle lens product" refers to a precursor product like a raw material or an intermediate product that undergoes further processing to become a spectacle lens, or to an unfinished, semifinished or finished spectacle lens. The spectacle lens product can take various forms depending on the manufacturing process and the type of lens being produced. The raw material may be a monomer, a polymer and/or a glass batch material, which may serve as the foundational substance for lens creation. The spectacle lens product may be a lens blank. A lens blank may be semi-finished lens that has been molded or cast into a basic shape but requires additional processing, such as grinding and polishing, to achieve the desired optical properties and prescription. The spectacle lens product may be a monomer or polymer material. Such materials may be polymerized and molded into a lens blank. The spectacle lens product may be coating substrate. It may be appreciated that the spectacle lens product may be any further product that undergoes further processing to become a spectacle lens.

The method comprises:
- generating at least one enhanced image based on the at least one base image showing at least the portion of the at least one marking applied to the spectacle lens product by using an image enhancement model, wherein the image enhancement model is or comprises at least one machine learning model, wherein the machine learning model is configured for enhancing at least one contrast characteristic in the enhanced image.

The term "generating" refers to the process of producing data based on at least one existing pattern or rule. Generating data may comprise using a model or a simulation. The model may be a rule-based model or a machine learning model.

Generating at least one enhanced image based on the at least one base image showing at least the portion of the at least one marking applied to the spectacle lens product, may comprise at least one of:
o receiving the at least one base image showing at least the portion of the at least one marking applied to the spectacle lens product as an input for the image enhancement model;
o determining and/or obtaining the at least one enhanced image by evaluating the at least one base image showing at least the portion of the at least one marking applied to the spectacle lens product and using the image enhancement model;
o providing the at least one enhanced image by the image enhancement model.

The at least one base image showing at least the portion of the at least one marking applied to the spectacle lens product may be received at least indirectly by a providing image capturing unit. The at least one enhancement model may be provided to a read out module.

The term "marking" may refer to a specific symbol configured to allow an identification in order to distinguish and/or categorize. The marking may be comprised by a further object, such as a spectacle lens product and/or the spectacle lens. The marking may comprise information. The information may be selected from at least one of: a lens identifier, specifically a lens ID; mold ID, puck ID. The comprised information may be provided by evaluating a course of the marking in at least one dimension. The marking may be a code. The marking may consequently be a 1D marking, such as a linear barcode like codabar or EAN codes. Alternatively, the marking may be a 2D marking, such as a data matrix code, codablock, Han-Xin-code or a QR-Code, alternatively, the marking may be a 3D marking. The marking may be a permanent marking, preferably engraved. The permanent marking may remain and be visible on the spectacle lens once the spectacle lens is finished.

"At least the portion of the at least one marking" may be a part of the marking or the entire marking. Relevant in that regard may be that the at least one marking can be read out such that at least a portion or any information that is comprised by the marking can be derived.

The term "enhanced image" refers to a specific image that is generated based on the at least one base image showing at least the portion of the at least one marking applied to the spectacle lens product but having an enhanced at least one contrast characteristic in respect to the at least one base image showing at least the portion of the at least one marking. Thereby, at least one of: the intensity difference, the color difference, the distinguishable contour between at least two portions of the image, particularly a first portion of the image comprising at least the portion of the at least one marking and a second portion of the image comprising the background is increased in respect to the at least one base image showing at least the portion of the at least one marking. Consequently, at least one of: the intensity difference, the color difference, the distinguishable contour between the portion of the at least one marking and the background is increased.

The method may further comprise:
- reading, preferably by using a read out module, the at least the portion of the at least one marking by evaluating the at least one enhanced image.

The term "read out", or any grammatical variation thereof, such as "reading", refers to the process of extracting information from a data by generating and/or providing further data. Thereby, the data may be image data comprising information on the portion of the at least one marking shown in the image, such as pixel data and/or vector data. The further data may be non-image data, such as text data, numerical data and/or tabular data.

Reading the at least the portion of the at least one marking by evaluating the at least one enhanced image may comprise decoding the at least the portion of the at least one marking by evaluating the at least one enhanced image. The term "decode", or any grammatical variation thereof, such as "decoding", refers to the process of interpreting and/or converting encoded data back into its original format and/or at least one further format, particularly by decrypting the encoded data. Decoding may be performed by using a decoding algorithm, such as LibDmtx.

**The method** may further comprise:
- generating at least one detail image of a region of interest in at least one image of the spectacle lens product, wherein the region of interest comprises at least the portion of at least one marking applied to the spectacle lens product, preferably by using an image detail module;
wherein the at least one base image showing at least the portion of the at least one marking applied to the spectacle lens product is the generated at least one detail image.

The term "region of interest" refers to a portion of an image that is selected for further processing. The region of interest in at least one image of the spectacle lens product may comprise only at least the portion of at least one marking applied to the spectacle lens product. The "detail image" may comprise only at least the portion of the at least one marking applied to the spectacle lens product. The detail image may be free of a at least further portion comprised by the at least one image of the spectacle lens product not comprising at least the portion of at least one marking applied to the spectacle lens product.

The detail image may be generated by using a detail model configured for detecting a region of interest in at least one image of the spectacle lens product. The detail model may perform one or more detail processing steps; preferably wherein the one or more detail processing steps are selected from the group consisting of: thresholding, segmentation. Alternatively, the detail model may be or may comprise a machine learning model configured for generating the at least one detail image. Alternatively, the detail model may detect the region of interest based on prior knowledge of where the marking is likely to appear.

The detail model may be configured to generate the at least one detail image in a manner that at least one of:
o at least a portion of a background is removed;
o at least the portion of the at least one marking applied to the spectacle lens product is maintaining at least in part intact.

The term "background" refers to a portion in the at least one image of the spectacle lens product that is not associated with the at least one marking applied to the spectacle lens product. Consequently, the background may not be related to the at least one marking applied to the spectacle lens product. The background may be free of the at least one marking applied to the spectacle lens product. The background may surround the at least one marking.

The term "maintaining at least in part intact" refers to the image data associated with or related to at least the portion of the at least one marking being kept unchanged or remained, particularly in regard to its color information and/or greyscale information, such as black and white information. It will be appreciated that the step of removing the background and maintaining the at least one marking applied to the spectacle lens product may be prone to inaccuracies, thereby, when removing the background, a portion of the at least one marking applied to the spectacle lens product may be removed.

The method may further comprise:
- capturing the at least one image of the spectacle lens product by using an image capturing unit, in particular wherein the capturing of the image is performed by using a retro reflective principle.

The term "image capturing unit" refers to a device having at least one imaging element configured for recording or capturing spatially resolved one-dimensional, two-dimensional or even three-dimensional optical data or information. As an example, the image capturing unit may comprise at least one chip, such as at least one CCD chip and/or at least one CMOS chip configured for recording images or image data. The image capturing unit may have a resolution that equals or is above 0.1 mm.

The term "capturing at least one image" refers to one or more of: imaging, image recording, image acquisition, image capturing. The term "capturing at least one image" may comprise capturing a single image and/or a plurality of images such as a sequence of images. For example, the capturing of the image may comprise recording continuously a sequence of images such as a video or a movie. The capturing of the at least one image may be initiated by the user action or may automatically be initiated, e.g. once the presence of the spectacle lens product within a field of view and/or within a predetermined sector of the field of view of the image capturing unit is automatically detected. Capturing the at least one image may be performed such that the spectacle lens product is provided in front of a homogenous background.

The term "retro reflective principle" refers to a specific image capturing procedure in which reflected light is captured by the image capturing unit. For capturing the at least one image of the spectacle lens product by using an image capturing unit, a light source may further be used in order to generate the reflected light. The light source may be arranged at the same side of the spectacle lens product as the image capturing unit. Further, background illumination may be dampened, such as by capturing the at least one image of the spectacle lens product in a dark environment.

The at least one base image showing at least the portion of the at least one marking applied to the spectacle lens product may be based on the captured at least one image of the spectacle lens product, such as
- the at least one base image showing at least the portion of the at least one marking applied to the spectacle lens product may be the captured at least one image of the spectacle lens product; or
- the at least one base image showing at least the portion of the at least one marking applied to the spectacle lens product may be used to generate the detail image.

Generating the at least one enhanced image based on the at least one base image comprises at least one of:
o increasing a contrast of at least the portion of the at least one marking in respect to the background, preferably in the enhanced image when compared to the base image;
o increasing at least one contrast ratio, preferably in the enhanced image when compared to the base image;
o reducing at least one noise characteristic of the at least one detail image, preferably in the enhanced image when compared to the base image.

The term "contrast" refers to a degree of at least one difference between a plurality of objects shown in an image. The contrast may refer to at least one of: brightness (luminance) difference, color (chrominance) difference, a distinguished contour of at least two portions of the image, particularly a first portion of the image comprising at least the portion of the marking and a second portion of the image comprising the background. The term "contrast ratio" refers to the ratio of the luminance of the brightest shade and the darkest shade of an image, particularly of the at least one detail image. The term "noise characteristic" refers to a random variation within an image that interferes with the image analysis. The noise characteristic may be a disturbance parameter with a non-specific color and/or intensity spectrum. The noise characteristic may be or may comprise a white, noise, a pink noise, a shot noise, a Gaussian noise and the like.

The enhanced image may be a color image of a given color depth or a gray scale image, or a black and white image. The term "gray scale image" refers to an image which the image data comprises only information on an intensity, preferably wherein the intensity is associated with the captured amount of light when generating the image. Thereby, the gray scale image comprises no color information. Differing gray shades used in the gray scale image indicate differing intensities. The "black and white image" is a specific gray scale image comprising only two gray shades, namely black and white. Thereby, the gray scale image is free of intermedia shades of gray.

The machine learning model may comprise a regression model. The term "regression model" refer to a specific machine learning model configured to operate in a regression mode. Thereby, the model is configured to predict at least one continuous numerical output.

The regression model may be a custom model built with a backbone of EfficientNet (cf. https://github.com/lukemelas/EfficientNet-PyTorch - retrieved February 28, 2025) or other state-of-the-art backbones.

The term "backbone" may refer to the core architecture or foundational model used in a machine learning system, particularly in neural networks. The backbone may be configured for feature extraction from the input data. The backbone serves as the at least one initial layer of the model that process the raw input and extract meaningful features that can be used for further analysis or tasks.

The input layer may take the at least one base image showing at least the portion of the at least one marking applied to the spectacle lens product as input. The input layer, typically, may be the same as the input layer of the backbone. The output layer may be a layer of neurons having a number of outputs corresponding to the number of required image processing parameters.

The input data to the regression model may be an image, where each pixel and/or vector is processed by the input layer. Each pixel and/or vector may be assigned to a different node in the input layer. The output layer may consist of one or more neurons, typically 6 neurons, each providing a specific parameter value, such as threshold, erosion, adaptive Gaussian, adaptive mean, opening, and closing parameter values. The output from the regression model may be directly input into the read-out module.

The regression model may use a pre-trained backbone with weights based on the ImageNet dataset (https://www.image-net.org/ - retrieved March 1, 2025) to enhance feature extraction. The one or more end layers may be trained alongside the backbone network. The one **or more** end layers may comprise a plurality of neurons, wherein a number of the plurality of neurons equals a number of input parameters that are used in the image processing steps.

The model may be further trained with initial weights set to ensure convergence. Training data may consist of pairs of known input images, such as at least one base image showing at least the portion of the at least one marking applied to the spectacle lens product, and known output images, such as the image processing parameters. The data may be split into training, validation and test sets with a ratio of 90:5:5. The training uses an Adam optimizer (https://github.com/theroyakash/Adam - retrieved March 1, 2025) with mean-squared error as the loss function. Alternatively or in addition to the Adam optimizer, an Adagrad optimizer, a RMSprop optimizer and/or a Momentum optimizer may be used.

The image enhancement model further may comprise at least one rule-based model, wherein the at least one rule-based model may be configured for performing one or more image processing steps; preferably wherein the one or more image processing steps are selected from the group consisting of:
o thresholding and erosion;
o adaptive Gaussian filtering;
o adaptive mean filtering;
o adaptive Gaussian filtering and erosion;
o adaptive mean filtering and opening and closing.

The term "rule-based model" refers to a model configured to generate an outcome by using predefined rules. Herein the term rule-based model refers to any computational model other than a machine learning model.

The machine learning model may be configured to determine at least one parameter that is input into the at least one rule-based model in order to adjust the behavior of the at least one rule-based model.

The term "behavior" refers to how the at least one rule-based model functions, operates and/or performs when processing data, making at least one decision and/or executing at least one task. The behavior may describe a pattern, an action and/or a response of the algorithm that is selected in accordance with the at least one parameter determined by using the machine learning model.

**The at least** one rule-based model may be configured for generating the at least one enhanced image based on the at least one base image showing at least the portion of the at least one marking applied to the spectacle lens product.

Generating the at least one enhanced image based on the at least one base image showing at least the portion of the at least one marking applied to the spectacle lens product may comprise at least one of:
- Inputting the at least one parameter determined by the machine learning model into the at least one rule-based model;
- Determining the behavior of the at least one rule-based model by evaluating the at least one parameter determined by the machine learning model;
- Inputting the at least one image into the at least one rule-based model;
- Determining the at least one enhanced image by evaluating the at least one image into the at least one rule-based model with the adjusted at least one rule-based model;
- Providing/Outputting the at least one enhanced image.

For adjusting the behavior of the at least one rule-based model, the at least one parameter that is input into the at least one rule-based model is at least one of:
o at least one image processing parameter used in a specific image processing step configured to adjust the behavior of the specific image processing step;
o at least one step parameter configured to define at least one image processing step to be performed and/or to not be performed;
o at least one sequence parameter configured to define at least one sequence of a plurality of image processing step to be performed.

The at least one image processing parameter may be at least one of: one or more threshold parameters, one or more erosion parameters; one or more image opening/closing parameters.

The machine learning model may be or may comprise an image-to-image translation model, wherein the image-to-image translation model is configured to convert the at least one base image showing at least the portion of the at least one marking applied to the spectacle lens product into the enhanced image.

The image-to-image translation model may be or may comprise a model selected from the group consisting of:
o Pix2pixHD;
o Contrastive Unpaired Translation (CUT).

The image-to-image translation models, Pix2pixHD and Contrastive Unpaired Translation (CUT), are open-source and can be accessed at https://github.com/NVIDIA/pix2pixHD (retrieved February 28, 2025) or https://github.com/cryu854/CUT (retrieved February 28, 2025).

These models may be further trained with initial weights set to ensure convergence. Training data may consist of pairs of known input images, such as at least one base image showing at least the portion of the at least one marking applied to the spectacle lens product, and known output images, such as the enhanced images. The output images may be generated by processing the input images through various image processing pipelines to achieve high contrast, allowing the markings to be read. The data may be split into training, validation and test sets with a ratio of 90:5:5. The optimizer used for training is available on the aforementioned websites. Model validation is performed by comparing the readout information from the output image to a known value.

The at least one base image showing at least the portion of the at least one marking applied to the spectacle lens product may be input into an input layer of the image-to-image translation model. The enhanced image may be output of an output layer of the image-to-image translation model. The input layer and the output layer may have the same number of dimensions or nodes. Consequently, the at least one base image showing at least the portion of the at least one marking applied to the spectacle lens product may have the same dimension as the enhanced image. Consequently, a number of pixels and/or vector may be the same in both images.

The input to the image-to-image model may be the at least one base image showing at least the portion of the at least one marking applied to the spectacle lens product, wherein each pixel and/or vector of the image may be processed by the input layer. Each pixel and/or vector may be input a differing node of the input layer. The output layer may output the enhanced image.

In a further aspect, a computer-implemented method for mix-up checking a particular spectacle lens product in a process of manufacturing a plurality of spectacle lenses is disclosed. For this aspect, reference may be made to any further aspect, Embodiment and/or definition disclosed herein.

The term "mix-up checking" refers to ensuring that items have not been confused, interchanged and/or improperly associated with each other. In particular regard of the present invention, a particular spectacle lens product may be checked to not been confused, interchanged and/or improperly associated with a further spectacle lens.

The steps of the method for mix-up checking a particular spectacle lens product in a process of manufacturing a plurality of spectacle lenses may be performed in the given order. A different order, however, may also be feasible. Further, two or more of the method steps may be performed simultaneously. Thereby, the method steps may at least partly overlap in time. Further, the method steps may be performed once or repeatedly. Thus, one or more or even all of the method steps may be performed once or repeatedly. The method may comprise additional method steps, which are not listed herein.

The particular spectacle lens product is subject to undergo at least one manufacturing step being performed by at least one manufacturing machine, the method comprising:
i. obtaining a lens identifier of a marking from the particular spectacle lens product, wherein obtaining the lens identifier of the marking from the particular spectacle lens product comprises performing the computer-implemented method for enhancing a contrast characteristic;
ii. comparing the lens identifier of the marking obtained from the particular spectacle lens product with a lens identifier obtained from a job ticket that is intended for a particular manufacturing step being performed by a particular manufacturing machine for the particular spectacle lens product;
iii. triggering the performing the manufacturing step dependent on the comparison result of step ii. by generating a trigger.

As further generally used, the term "manufacturing" refers to a process of providing an optical lens configured for determining and/or altering the vision of a wearer of the optical lens. Herein, the manufacturing process may comprise at least one or a plurality of individual manufacturing steps, wherein each "manufacturing step" refers to at least one treatment of the at least one optical lens. In general, geometric values of one or both surfaces of a particular optical lens may be used as input data for the at least one manufacturing step in a process of producing the particular optical lens from a lens blank. For this purpose, at least one manufacturing machine is used. As generally, used the term "manufacturing machine" refers to a tool or a device which is configured for performing the at least one manufacturing step. By way of example, the at least one manufacturing step may be selected from grinding, polishing, coating, engraving, taping, inspecting, or measuring one or both surfaces of the optical lens. Alternatively or in addition, the at least one manufacturing step may be selected from washing, blocking, or deblocking the optical lens. As a further alternative, the at least one manufacturing step may comprise a step of adapting the optical lens to a frame, in particular measuring at least one property of the frame, preferably a geometrical contour for cutting and edging; or fitting the optical lens to the frame.

The term "lens identifier" refers to a unique label allowing identification of the particular spectacle lens product, preferably unambiguous identification of the particular spectacle lens product. The lens identifier may be a lens ID. The term "job ticket" refers to information on the manufacturing process to be performed by the manufacturing machine on the particular spectacle lens product. The job ticket further may comprise information on the lens identifier. The job ticket may be received from a transmitting server, such as a cloud server, particularly via one or more connection interfaces. The one or more connection interfaces may be comprised by the manufacturing machine.

Triggering the performing of the particular manufacturing step by the particular manufacturing machine dependent on the comparison result of step ii. may comprise at least one of:
- Triggering the performing of the particular manufacturing step by the particular manufacturing machine if the lens identifier of the marking obtained from the particular spectacle lens product and the lens identifier obtained from a job ticket are the same;
- Triggering the performing of the particular manufacturing step by the particular manufacturing machine if the lens identifier of the marking obtained from the particular spectacle lens product and the lens identifier obtained from a job ticket are the same.

The method may further comprise:
iv. performing the manufacturing step when a trigger indicating that the particular manufacturing step that is generated in step iii. is received by the particular manufacturing machine, wherein the manufacturing step is performed by the particular manufacturing machine.

In a further aspect, a computer program comprising instructions is disclosed, which, when executed by a computer, cause the computer to perform the steps of one of the methods as disclosed elsewhere herein. For this aspect, reference may be made to any further aspect, Embodiment and/or definition disclosed herein.

In a further aspect, a device, wherein the device is configured for performing the steps of one of the methods as disclosed elsewhere herein. For this aspect, reference may be made to any further aspect, Embodiment and/or definition disclosed herein.

In a further aspect, a, specifically non-transient, computer-readable medium comprising instructions is disclosed that, when executed by one or more processors, cause the one or more processors to perform the method as elsewhere disclosed herein. For this aspect, reference may be made to any further aspect, Embodiment and/or definition disclosed herein.

The term "computer-readable storage medium" may refer to a, specifically non-transitory, data storage means, such as a hardware storage medium having stored thereon computer-executable instructions. The stored computer-executable instruction may be associate with the computer program. The computer-readable data carrier or storage medium specifically may be or may comprise a storage medium such as a random-access memory (RAM) and/or a read-only memory (ROM).

In a further aspect, a system for enhancing a contrast characteristic of at least one base image showing at least a portion of at least one marking applied to the spectacle lens product is disclosed. For this aspect, reference may be made to any further aspect, Embodiment and/or definition disclosed herein.

The system comprises:
- an image enhancement module, wherein the image enhancement module is configured for generating at least one enhanced image based on the at least one base image showing at least the portion of the at least one marking applied to the spectacle lens product by using an image enhancement model, wherein the image enhancement model is or comprises at least one machine learning model, wherein the machine learning model is configured for enhancing at least one contrast characteristic in the enhanced image.

The term "module" may refer to a hardware component and/or a software instance.

The system may further comprise:
- an image detail module, wherein the image detail module is configured for generating at least one detail image of a region of interest in at least one image of the spectacle lens product, wherein the region of interest comprises at least the portion of at least one marking applied to the spectacle lens product.

The system may further comprise:
- an image capturing unit, wherein the image capturing unit is configured for capturing the at least one image of the spectacle lens product by using an image capturing unit, in particular wherein the capturing of the image is performed by using a retro reflective principle.

The system may further comprise:
- a read out module, wherein the read out module is configured for reading, preferably by using a read out module, the at least the portion of the at least one marking by evaluating the at least one enhanced image.

In a further aspect, a computer program comprising instructions that, when the program is executed by the system, cause the system to perform the method as elsewhere disclosed herein.

In a further aspect, a, specifically non-transient, computer-readable storage medium comprising instructions that, when the instructions are executed by the system, cause the system to perform the method as elsewhere disclosed herein.

In a further aspect, a method for producing at least one spectacle lens, wherein the at least one spectacle lens is manufactured by processing at least one lens blank, wherein producing at least one spectacle lens comprises performing the method as elsewhere disclosed herein.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

The methods and devices according to the present invention exhibit various advantages compared to methods and devices as known from the prior art. In particular, they improve the reliability of the marking read of the marking applied to the spectacle lens product. Further, they increase the speed of a manufacturing process.

Summarizing and without excluding further possible embodiments, the following embodiments may be envisaged:
Embodiment 1: A computer-implemented method for enhancing a contrast characteristic of at least one base image showing at least a portion of at least one marking applied to a spectacle lens product, the method comprising:
   - generating at least one enhanced image based on the at least one base image showing at least the portion of the at least one marking applied to the spectacle lens product by using an image enhancement model, wherein the image enhancement model is or comprises at least one machine learning model, wherein the machine learning model is configured for enhancing at least one contrast characteristic in the enhanced image.
Embodiment 2: The method according to the preceding Embodiment, further comprising:
   - reading, preferably by using a read out module, the marking by evaluating the at least one enhanced image.
Embodiment 3: The method according to any one of the preceding Embodiments, further comprising:
   - generating at least one detail image of a region of interest in at least one image of the spectacle lens product, wherein the region of interest comprises at least the portion of at least one marking applied to the spectacle lens product, preferably by using an image detail model;
   wherein the at least one base image showing at least the portion of the at least one marking applied to the spectacle lens product is the generated at least one detail image.
Embodiment 4: The method according to the preceding Embodiment, wherein the detail model is a real-time detail model.
Embodiment 5: The method according to any one of the two preceding Embodiments, wherein the detail model is configured to generate the at least one detail image in a manner that at least one of:
   o at least a portion of a background is removed;
   o at least the portion of the at least one marking applied to the spectacle lens product is maintaining at least in part intact.
Embodiment 6: The method according to any one of the preceding Embodiments, wherein the marking comprises a 1D marking, a 2D marking, in particular a data matrix code, and/or a 3D marking.
Embodiment 7: The method according to the preceding Embodiment, further comprising:
   - capturing the at least one image of the spectacle lens product by using an image capturing unit, in particular wherein the capturing of the image is performed by using a retro reflective principle, preferably wherein the at least one base image showing at least the portion of the at least one marking applied to the spectacle lens product is based on the captured at least one image of the spectacle lens product.
Embodiment 8: The method according to any one of the preceding Embodiments, wherein generating the at least one enhanced image based on the at least one base image comprises at least one of:
   o increasing a contrast of at least the portion of the at least one marking in respect to the background, preferably in the enhanced image when compared to the base image;
   o increasing at least one contrast ratio, preferably in the enhanced image when compared to the base image;
   o reducing at least one noise characteristic, preferably in the enhanced image when compared to the base image.
Embodiment 9: The method according to any one of the preceding Embodiments, wherein the enhanced image is a gray scale image, specifically a black and white image.
Embodiment 10: The method according to any one of the preceding Embodiments, wherein the machine learning model comprises a regression model.
Embodiment 11: The method according to any one of the preceding Embodiments, wherein the image enhancement model comprises at least one rule-based model, wherein the at least one rule-based model is configured for performing one or more image processing steps; preferably wherein the one or more image processing steps are selected from the group consisting of:
   o thresholding and erosion;
   o adaptive Gaussian filtering;
   o adaptive mean filtering;
   o adaptive Gaussian filtering and erosion;
   o adaptive mean filtering and opening and closing.
Embodiment 12: The method according to the preceding Embodiment, wherein the machine learning model is configured to determine at least one parameter that is input into the at least one rule-based model in order to adjust the behavior of the at least one rule-based model.
**Embodiment** 13: The method according to the preceding Embodiment, wherein, for adjusting the behavior of the at least one rule-based model, at least one parameter that is input into the at least one rule-based model is at least one of:
   o at least one image processing parameter used in a specific image processing step configured to adjust the behavior of the specific image processing step;
   o at least one step parameter configured to define at least one image processing step to be performed and/or to not be performed;
   o at least one sequence parameter configured to define at least one sequence of a plurality of image processing step to be performed.
Embodiment 14: The method according to any one of the preceding Embodiments, wherein the machine learning model is or comprises an image-to-image translation model, wherein the image-to-image translation model is configured to convert the at least one base image showing at least the portion of the at least one marking applied to the spectacle lens product into the enhanced image.
Embodiment 15: The method according to the preceding Embodiment, wherein the image-to-image translation model is or comprises a model selected from the group consisting of:
   o Pix2pixHD
   o Contrastive Unpaired Translation (CUT).
Embodiment 16: A computer-implemented method for mix-up checking a particular spectacle lens product in a process of manufacturing a plurality of spectacle lenses, wherein the particular spectacle lens product is subject to undergo at least one manufacturing step being performed by at least one manufacturing machine, the method comprising:
   i. obtaining a lens identifier of a marking from the particular spectacle lens product, wherein obtaining the lens identifier of the marking from the particular spectacle lens product comprises performing the computer-implemented method for enhancing a contrast characteristic according to any one of the preceding Embodiments;
   ii. comparing the lens identifier of the marking obtained from the particular spectacle lens product with a lens identifier obtained from a job ticket that is intended for a particular manufacturing step being performed by a particular manufacturing machine for the particular spectacle lens product;
   iii. triggering the performing the manufacturing step dependent on the comparison result of step ii. by generating a trigger.
Embodiment 17: The method according to the preceding Embodiment, further comprising:
   iv. performing the manufacturing step when a trigger indicating that the particular manufacturing step that is generated in step iii. is received by the particular manufacturing machine, wherein the manufacturing step is performed by the particular manufacturing machine.
Embodiment 18: A computer program comprising instructions which, when executed by a computer, cause the computer to perform the steps of one of the methods according to any one of the preceding method Embodiments 1 to 16 and 17.
Embodiment 19: A device, wherein the device is configured for performing the steps of one of the methods according to any one of the preceding method Embodiments 1 to 16 and 17.
Embodiment 20: A, specifically non-transient, computer-readable medium comprising instructions is disclosed that, when executed by one or more processors, cause the one or more processors to perform the methods according to any one of the preceding method Embodiments 1 to 16 and 17 to 18.
Embodiment 21: A system for enhancing a contrast characteristic of at least one base image showing at least a portion of at least one marking applied to a spectacle lens product, the system comprising:
   - an image enhancement module, wherein the image enhancement module is configured for generating at least one enhanced image based on the at least one base image showing at least the portion of the at least one marking applied to the spectacle lens product by using an image enhancement model, wherein the image enhancement model is or comprises at least one machine learning model, wherein the machine learning model is configured for enhancing at least one contrast characteristic in the enhanced image.
Embodiment 22: The system according to the preceding Embodiment, further comprising:
   - an image detail module, wherein the image detail module is configured for generating at least one detail image of a region of interest in at least one image of the spectacle lens product, wherein the region of interest comprises at least the portion of at least one marking applied to the spectacle lens product.
Embodiment 23: The system according to the preceding system Embodiment, further comprising:
   - an image capturing unit, wherein the image capturing unit is configured for capturing the at least one image of the spectacle lens product by using an image capturing unit, in particular wherein the capturing of the image is performed by using a retro reflective principle.
Embodiment 24: The system according to any one of the preceding system Embodiments, further comprising:
   - a read out module, wherein the read out module is configured for reading, preferably by using a read out module, the at least the portion of the at least one marking by evaluating the at least one enhanced image.
Embodiment 25: A computer program comprising instructions that, when the program is executed by the system according to any one of the preceding Embodiments referring to a system, cause the system to perform the method according to any one of the preceding Embodiments 1 to 16 and 17 to 18.
Embodiment 26: A, specifically non-transient, computer-readable storage medium comprising instructions that, when the instructions are executed by the system according to any one of the preceding Embodiments referring to a system, cause the system to perform the method according to any one of the preceding Embodiments 1 to 16 and 17 to 18.
Embodiment 27: A method for producing at least one spectacle lens, wherein the at least one spectacle lens is manufactured by processing at least one lens blank, wherein producing at least one spectacle lens comprises performing the method according to any one of the preceding Embodiments 1 to 16 and 17 to 18.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an exemplary process of manufacturing a particular spectacle, an exemplary computer-implemented method for enhancing a contrast characteristic and an exemplary computer-implemented method for mix-up checking the particular spectacle lens product;
- Figure 2: shows an exemplary machine learning model being or comprising an image-to-image translation model; and
- Figure 3: shows an exemplary system for enhancing a contrast characteristic of at least one image.

### Detailed description of the embodiments

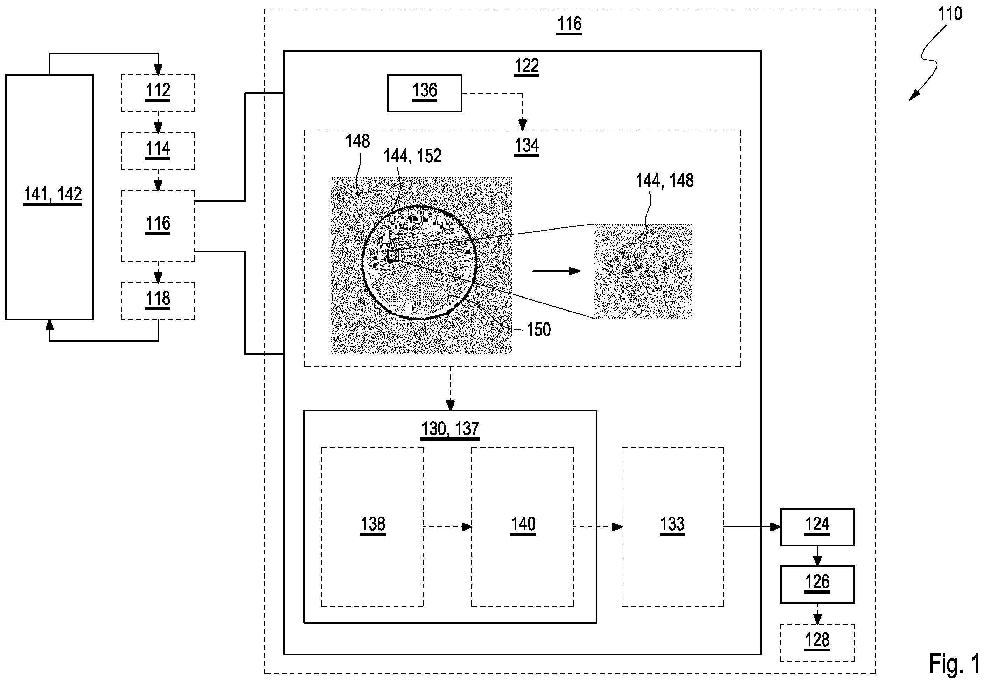

In Figure 1, an exemplary process (denoted by reference number 110) of manufacturing a particular spectacle lens product 150 in a process of manufacturing a plurality of spectacle lenses 150 is depicted. The particular spectacle lens product 150 is subject to undergo at least one manufacturing step being performed by at least one manufacturing machine 142.

The process (denoted by reference number 110) may comprise:
- loading in an input product of the particular spectacle lens product 150 (denoted by reference number 112) into the at least one manufacturing machine 142.

The process (denoted by reference number 110) may further comprise:
- receiving a job ticket (denoted by reference number 114) that is intended for the particular manufacturing step being performed by the particular manufacturing machine 142 for the particular spectacle lens product 150.

The process (denoted by reference number 110) may further comprise:
- performing a method for mix-up checking the particular spectacle lens product 150 (denoted by reference number 116) in the process of manufacturing the plurality of spectacle lenses 150.

The process (denoted by reference number 110) may further comprise:
- unloading the processed particular spectacle lens product 150 (denoted by reference number 118).

The exemplary computer-implemented method for mix-up checking the particular spectacle lens product 150 (denoted by reference number 116) in the process of manufacturing the plurality of spectacle comprises:
i. obtaining a lens identifier of a marking 144 (denoted by reference number 122) from the particular spectacle lens product 150, wherein obtaining the lens identifier of the marking 144 from the particular spectacle lens product 150 comprises performing the computer-implemented method for enhancing a contrast characteristic;
ii. comparing the lens identifier of the marking 144 (denoted by reference number 124) obtained from the particular spectacle lens product 150 with a lens identifier obtained from a job ticket that is intended for a particular manufacturing step being performed by a particular manufacturing machine 142 for the particular spectacle lens product 150;
iii. triggering the performing the manufacturing step (denoted by reference number 126) dependent on the comparison result of step ii. by generating a trigger.

The trigger may be generated by an evaluation unit of the manufacturing machine 142 and/or a server, such as a cloud server.

The method (denoted by reference number 116) may further comprise:
iv. performing the manufacturing step (denoted by reference number 128) when the trigger that is generated in step iii. is received by the particular manufacturing machine 142, wherein the manufacturing step is performed by the particular manufacturing machine 142.

In step iv., the processed particular spectacle lens product 150 may by generated. In case the trigger is generated by the evaluation unit of the manufacturing machine 142 the trigger may be received internally by the evaluation unit of the manufacturing machine 142 and/or a manufacturing unit of the manufacturing machine 142.

The exemplary computer-implemented method for enhancing a contrast characteristic (denoted by reference number 122) of at least one base image 148 showing at least a portion of at least one marking 144 applied to the spectacle lens product 150 comprise:
- generating at least one enhanced image 146 (denoted by reference number 130) based on the at least one base image 148 showing at least the portion of the at least one marking 144 applied to the spectacle lens product 150 by using an image enhancement model 137, wherein the image enhancement model 137 is or comprises at least one machine learning model 138, wherein the machine learning model 138 is configured for enhancing at least one contrast characteristic in the enhanced image 146.

The method (denoted by reference number 122) may further comprise:
- reading, preferably by using a read out module 162, the marking 144 (denoted by reference number 132) by evaluating the at least one enhanced image 146.

The method (denoted by reference number 122) may further comprise:
- generating at least one detail image (denoted by reference number 134) of a region of interest 152 in at least one image of the spectacle lens product 150, wherein the region of interest 152 comprises at least the portion of at least one marking 144 applied to the spectacle lens product 150, preferably by using an image detail model 158;
wherein the at least one base image 148 showing at least the portion of the at least one marking 144 applied to the spectacle lens product 150 is the generated at least one detail image. The detail model may be a real-time detail model.

The marking 144 may comprise a 1D marking, a 2D marking, such as a data matrix code, and/or a 3D marking.

The detail model may be configured to generate the at least one detail image in a manner that at least one of:
o at least a portion of a background is removed;
o at least the portion of the at least one marking 144 applied to the spectacle lens product 150 is maintaining at least in part intact.

The method (denoted by reference number 122) further may comprise:
- capturing at least one image of the spectacle lens product 150 (denoted by reference number 136) by using an image capturing unit, in particular wherein the capturing of the image is performed by using a retro reflective principle, preferably wherein the at least one base image 148 showing at least the portion of the at least one marking 144 applied to the spectacle lens product 150 is based on the captured at least one image of the spectacle lens product 150.

Generating the at least one enhanced image 146 based on the at least one base image 148 comprises at least one of:
o increasing a contrast of at least the portion of the at least one marking 144 in respect to the background, preferably when compared to the at least one base image 148 showing at least the portion of the at least one marking 144 applied to the spectacle lens product 150;
o increasing at least one contrast ratio of the at least one detail image, preferably when compared to the at least one base image 148 showing at least the portion of the at least one marking 148 applied to the spectacle lens product 150;
o reducing at least one noise characteristic of the at least one detail image, preferably when compared to the at least one base image 148 showing at least the portion of the at least one marking 148 applied to the spectacle lens product 150.

The enhanced image 146 may be a gray scale image, specifically a black and white image, as may be derived from Fig. in which an exemplary enhanced image 146 is depicted.

The machine learning model 138 may comprise a regression model. The image enhancement model 137 further may comprise at least one rule-based model 140. The at least one rule-based model 140 may be configured for performing one or more image processing steps; preferably wherein the one or more image processing steps are selected from the group consisting of:
o thresholding and erosion;
o adaptive Gaussian filtering;
o adaptive mean filtering;
o adaptive Gaussian filtering and erosion;
o adaptive mean filtering and opening and closing.

The machine learning model 138 may be configured to determine at least one parameter that is input into the at least one rule-based model 140 in order to adjust the behavior of the at least one rule-based model 140. Wherein, for adjusting the behavior of the at least one rule-based model 140, at least one parameter that is input into the at least one rule-based model 140 may be at least one of:
o at least one image processing parameter used in a specific image processing step configured to adjust the behavior of the specific image processing step;
o at least one step parameter configured to define at least one image processing step to be performed and/or to not be performed;
o at least one sequence parameter configured to define at least one sequence of a plurality of image processing step to be performed.

As may be derived from Fig. 1, a device 140, preferably an evaluation unit of the manufacturing machine 142 and/or a server, such as a cloud server, is configured for performing the steps of one of the methods (denoted by reference numbers 116 and 122).

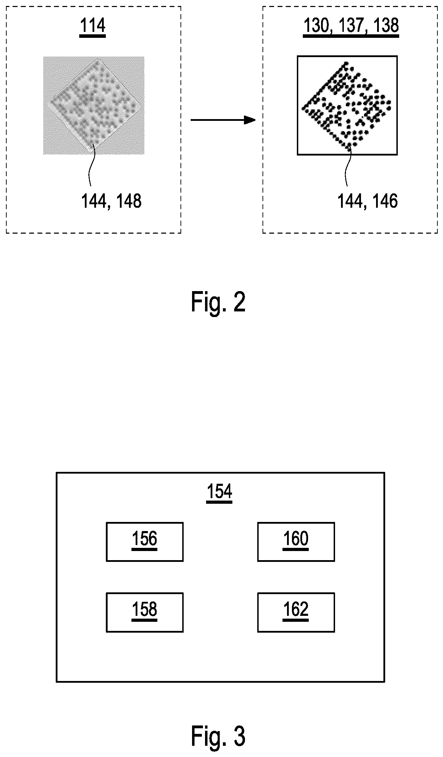

As may be derived from Fig. 2, the machine learning model 138 may be or may comprise an image-to-image translation model, wherein the image-to-image translation model is configured to convert the at least one base image 148 showing at least the portion of the at least one marking 144 applied to the spectacle lens product 150 into the enhanced image 146. The image-to-image translation model may be or may comprise a model selected from the group consisting of:
o Pix2pixHD;
o Contrastive Unpaired Translation (CUT).

In Figure 3, an exemplary system 154 for enhancing a contrast characteristic of at least one image showing at least portion of at least one marking 144 applied to a spectacle lens product 150, the system 154 comprising:
- an image enhancement module 156, wherein the image enhancement module 156 is configured for generating at least one enhanced image 146 based on the at least one base image 148 showing at least the portion of the at least one marking 144 applied to the spectacle lens product 150 by using an image enhancement model 137, wherein the image enhancement model 137 is or comprises at least one machine learning model 138, wherein the machine learning model 138 is configured for enhancing at least one contrast characteristic in the enhanced image 146.

The system may further comprise:
- an image detail module 158, wherein the image detail module 158 is configured for generating at least one detail image of a region of interest 152 in at least one image of the spectacle lens product 150, wherein the region of interest 152 comprises at least the portion of at least one marking 144 applied to the spectacle lens product 150.

The system may further comprise:
- an image capturing unit 160, wherein the image capturing unit 160 is configured for capturing at least one image of the spectacle lens product 150 by using an image capturing unit, in particular wherein the capturing of the image is performed by using a retro reflective principle.

The system may further comprise:
- a read out module 162, wherein the read out module 162 is configured for reading the at least the portion of the at least one marking 144 by evaluating the at least one enhanced image 146.

### List of reference numbers

- 110: process of manufacturing a particular spectacle lens product in a process of manufacturing a plurality of spectacle lenses
- 112: loading in a precursor product of the particular spectacle lens
- 114: receiving a job ticket
- 116: performing a method for mix-up checking the particular spectacle lens product
- 118: unloading the processed particular spectacle lens product
- 122: obtaining a lens identifier of a marking
- 124: comparing the lens identifier of the marking
- 126: triggering the performing the manufacturing step
- 128: performing the manufacturing step
- 130: generating at least one enhanced image
- 132: reading the marking
- 134: generating at least one detail image
- 136: capturing at least one image of the spectacle lens product
- 137: image enhancement model
- 138: machine learning model
- 140: rule-based model
- 141: device
- 142: manufacturing machine
- 144: marking
- 146: enhanced image
- 148: base image showing at least the portion of the at least one marking applied to the spectacle lens product
- 150: spectacle lens product/spectacle lens
- 152: region of interest
- 154: system for enhancing a contrast characteristic of at least one image
- 156: image enhancement module
- 158: image detail module
- 160: image capturing unit
- 162: read out module

## Claims

1. A method implemented on a processor being configured for enhancing a contrast characteristic of at least one base image (148) showing at least a portion of at least one marking (144) applied to a spectacle lens product (150), the method comprising:
- generating at least one enhanced image (146) based on the at least one base image (148) showing at least the portion of the at least one marking (144) applied to the spectacle lens product (150) by using an image enhancement model (137),
**characterized in that**
the image enhancement model (137) is or comprises at least one machine learning model (138), wherein the machine learning model (138) is configured for enhancing at least one contrast characteristic in the enhanced image (146).

2. The method according to the preceding claim, further comprising:
- reading the marking (144) by evaluating the at least one enhanced image (146).

3. The method according to any one the preceding claims, further comprising:
- generating at least one detail image of a region of interest (152) in at least one image of the spectacle lens product (150), wherein the region of interest (152) comprises at least the portion of the at least one marking (144) applied to the spectacle lens product (150);
wherein the at least one base image (148) showing at least the portion of the at least one marking (144) applied to the spectacle lens product (150) is the generated at least one detail image.

4. The method according to the preceding claim, further comprising:
- capturing the at least one image of the spectacle lens product (150) by using an image capturing unit.

5. The method according to any one of the preceding claims, wherein generating the at least one enhanced image (146) based on the at least one base image (148) comprises at least one of:
o increasing a contrast of at least the portion of the at least one marking (144) in respect to a background;
o increasing at least one contrast ratio;
o reducing at least one noise characteristic.

6. The method according to any one of the preceding claims, wherein the machine learning model (138) comprises a regression model.

7. The method according to any one of the preceding claims, wherein the image enhancement model (137) comprises at least one rule-based model (140), wherein the at least one rule-based model (140) is configured for performing one or more image processing steps.

8. The method according to the preceding claim, wherein the machine learning model (138) is configured to determine at least one parameter that is input into the at least one rule-based model (140) in order to adjust the behavior of the at least one rule-based model (140).

9. The method according to the preceding claim, wherein, for adjusting the behavior of the at least one rule-based model (140), the at least one parameter that is input into the at least one rule-based model (140) is at least one of:
o at least one image processing parameter used in a specific image processing step configured to adjust the behavior of the specific image processing step;
o at least one step parameter configured to define at least one image processing step to be performed and/or to not be performed;
o at least one sequence parameter configured to define at least one sequence of a plurality of image processing step to be performed.

10. The method according to any one of the preceding claims, wherein the machine learning model (138) is or comprises an image-to-image translation model, wherein the image-to-image translation model is configured to convert the at least one base image (148) showing at least the portion of the at least one marking (144) applied to the spectacle lens product (150) into the enhanced image (146).

11. A method implemented on a processor configured for mix-up checking a particular spectacle lens product (150) in a process of manufacturing a plurality of spectacle lenses (150), wherein the particular spectacle lens product (150) is subject to undergo at least one manufacturing step being performed by at least one manufacturing machine (142), the method comprising:
i. obtaining a lens identifier of a marking (144) from the particular spectacle lens product (150), wherein obtaining the lens identifier of the marking (144) from the particular spectacle lens product (150) comprises performing a computer-implemented method for enhancing a contrast characteristic of at least one base image (148) showing at least a portion of at least one marking (144) applied to a spectacle lens product (150), the method comprising:
- generating at least one enhanced image (146) based on the at least one base image (148) showing at least the portion of the at least one marking (144) applied to the spectacle lens product (150) by using an image enhancement model (137),
ii. comparing the lens identifier of the marking (144) obtained from the particular spectacle lens product (150) with a lens identifier obtained from a job ticket that is intended for a particular manufacturing step being performed by a particular manufacturing machine (142) for the particular spectacle lens product (150);
iii. triggering the performing the manufacturing step dependent on the comparison result of step ii. by generating a trigger.
**characterized in that**
the image enhancement model (137) is or comprises at least one machine learning model (138), wherein the machine learning model (138) is configured for enhancing at least one contrast characteristic in the enhanced image (146).

12. A computer program comprising instructions which, when executed by a computer, cause the computer to perform the steps of a computer-implemented method for enhancing a contrast characteristic of at least one base image (148) showing at least a portion of at least one marking (144) applied to a spectacle lens product (150), the method comprising:
- generating at least one enhanced image (146) based on the at least one base image (148) showing at least the portion of the at least one marking (144) applied to the spectacle lens product (150) by using an image enhancement model (137),
**characterized in that**
the image enhancement model (137) is or comprises at least one machine learning model (138), wherein the machine learning model (138) is configured for enhancing at least one contrast characteristic in the enhanced image (146).

13. A device (141), wherein the device (141) is configured for performing the steps of one of a computer-implemented method for enhancing a contrast characteristic of at least one base image (148) showing at least a portion of at least one marking (144) applied to a spectacle lens product (150), the method comprising:
- generating at least one enhanced image (146) based on the at least one base image (148) showing at least the portion of the at least one marking (144) applied to the spectacle lens product (150) by using an image enhancement model (137),
**characterized in that**
the image enhancement model (137) is or comprises at least one machine learning model (138), wherein the machine learning model (138) is configured for enhancing at least one contrast characteristic in the enhanced image (146).

14. A computer-readable medium comprising instructions is disclosed that, when executed by one or more processors, cause the one or more processors to perform a computer-implemented method for enhancing a contrast characteristic of at least one base image (148) showing at least a portion of at least one marking (144) applied to a spectacle lens product (150), the method comprising:
- generating at least one enhanced image (146) based on the at least one base image (148) showing at least the portion of the at least one marking (144) applied to the spectacle lens product (150) by using an image enhancement model (137),
**characterized in that**
the image enhancement model (137) is or comprises at least one machine learning model (138), wherein the machine learning model (138) is configured for enhancing at least one contrast characteristic in the enhanced image (146).

15. A method for producing at least one spectacle lens (502), wherein the at least one spectacle lens is manufactured by processing at least one lens blank, wherein producing at least one spectacle lens (502) comprises performing a computer-implemented method for enhancing a contrast characteristic of at least one base image (148) showing at least a portion of at least one marking (144) applied to a spectacle lens product (150), the method comprising:
- generating at least one enhanced image (146) based on the at least one base image (148) showing at least the portion of the at least one marking (144) applied to the spectacle lens product (150) by using an image enhancement model (137),
**characterized in that**
the image enhancement model (137) is or comprises at least one machine learning model (138), wherein the machine learning model (138) is configured for enhancing at least one contrast characteristic in the enhanced image (146).
